Europäisches Patentamt

(19) European Patent Office

Office européen des brevets

(11) Publication number: **0 022 102**
**B1**

# EUROPEAN PATENT SPECIFICATION

(45) Date of publication of patent specification: **13.07.83**

(51) Int. Cl.³: **B 60 R 25/00, F 16 B 41/00**

(21) Application number: **80850086.2**

(22) Date of filing: **10.06.80**

(54) A locking device for locking a rotatable shaft against rotation.

(30) Priority: **21.06.79 DE 7905522 U**

(43) Date of publication of application:
**07.01.81 Bulletin 81/1**

(45) Publication of the grant of the patent:
**13.07.83 Bulletin 83/28**

(84) Designated Contracting States:
**AT BE CH DE FR GB LI NL**

(56) References cited:
**CA - A - 878 242**
**DE - C - 945 975**
**DE - U - 7 431 900**
**DE - U - 7 527 772**
**GB - A - 1 456 146**
**GB - A - 1 493 043**
**GB - A - 1 532 282**
**US - A - 1 792 403**
**US - A - 3 889 500**

(73) Proprietor: GKN-Stenman AB
Box 371
S-631 05 Eskilstuna (SE)

(72) Inventor: Häggström, Ake
Granvägen 10
S-921 00 Lycksele (SE)

(74) Representative: Wennborg, Göte et al,
KRANSELL & WENNBORG AB Sandhamnsgatan
42
S-115 28 Stockholm (SE)

## A locking device for locking a rotatable shaft against rotation

In the Swedish Published specification SEA—77 13671-1 there is described a locking device for locking a rotatable shaft against rotation. The locking device, for example, can be used to lock the supporting legs of a caravan, by preventing rotation of the shaft which actuates the said supporting legs, so that they are held locked in their position of use, thereby rendering it practically impossible to tow the caravan behind a vehicle, e.g. by some unauthorized person.

Although the locking device described in the Published specification above is highly satisfactory in practice, it is relatively expensive to manufacture, since it requires the use of a parallelepipedic sleeve element, which is displaceable in an outer casing and which must be a relatively good fit therein. The device is primarily intended to co-act with a shaft having at one end thereof a nut or like element. In many cases, however, there is a need of preventing shafts of other designs from being rotated or pivoted, and an object of the present invention is to provide a device for this purpose, and to provide such a device which is of simpler construction and less expensive to manufacture than the previously known device.

Another prior locking device is described in GB—A—1 456 146. With regard to Swedish prior art which already describes a locking device for locking a pivotable or rotatable shaft against rotation, e.g. a shaft for activating the supporting legs of a caravan, said locking device including a housing in which the shaft and an anchoring means associated therewith can be inserted, said anchoring means being arranged to co-act with an active element of a lock cylinder, so that in the locking position the housing is held on the shaft and the shaft is held locked against rotation, the invention is mainly characterized in that the housing has a means preventing its rotation relative to a fixed structure, that the lock cylinder and its active element can be inserted into a recess or opening in the housing at right angles to the shaft, and in that the active element, in a position for co-operation with the anchoring means of said shaft, can be rotated to anchor the shaft, the lock cylinder and its active part relative to the housing.

The housing of a locking device according to the invention may have the form of a robust unit which, for example, is open at one end so that it can be fitted onto the shaft and the anchoring means thereof. The housing exhibits on one side surface located at right angles to said open end, a recess or opening in which the lock cylinder and its active part can be inserted. An open end of the housing may serve as the means preventing its rotation relative to the fixed structure which may comprise a screw jack.

Upon rotation, the lock cylinder is anchored in the housing, which, for example, can be effected by means of an outwardly extending peg or the like on the active part of said cylinder, said peg engaging against a suitably located part of the housing. If, for example, the lock cylinder is accommodated in a sleeve-like part of the housing, a radially projecting means on the active part of the cylinder can be caused to co-act with an end edge of the sleeve-like part.

In practice, however, the active part of the lock cylinder is preferably capable of being anchored in the side of the housing opposite the recess or opening. The shaft itself may have any desired configuration, the one requisite being that the anchoring means of the shaft can co-act in a suitable manner with the active part of the lock cylinder. In the case of shafts of large dimensions in particular, the anchoring means of the shaft may simply comprise a radial hole in the shaft in which the active part of the lock cylinder passes.

In many cases, however, in practice the anchoring means of the shaft preferably comprises a stirrup-like structure or an eye through which the active part of the lock cylinder passes.

To ensure that the actual lock cylinder is held against rotation in the housing, the recess in said housing is preferably defined by a non-round part whose dimensions correspond to the outer measurements of the lock cylinder. The non-roundness of the lock cylinder may be achieved, for example, by planing or milling a conventional, screw-threaded lock cylinder at two mutually opposed locations so as to give the cylinder two flat side surfaces, two mutually opposite defining walls of the recess or opening in the housing being formed in a corresponding manner.

In an embodiment of the invention preferred in practice, the active part of the lock cylinder has at one end a non-round head which, in one position of rotation, can be passed through a non-round hole in the wall of the housing but which in another position of rotation is held against axial movement in the hole.

An embodiment which can be manufactured very simply is obtained when the head is defined on one side by a waist portion arranged to co-act with the wall defining the hole in said housing, the outside of the hole being covered by an outwardly bulged portion or a similar housing part, so as to protect the head in the inserted position in the hole.

The invention will now be described with reference to the accompanying drawings.

Figure 1 is a perspective view of a caravan support leg which can be raised and lowered by means of a screw jack, and shows the main parts of a locking device according to the invention for locking the shaft of the screw jack.

Figure 2 is a partially cut away perspective view of the housing of a locking device according to the invention.

Figure 3 is a cross sectional view of said shaft and of anchoring means in a locking position in the housing of the locking device.

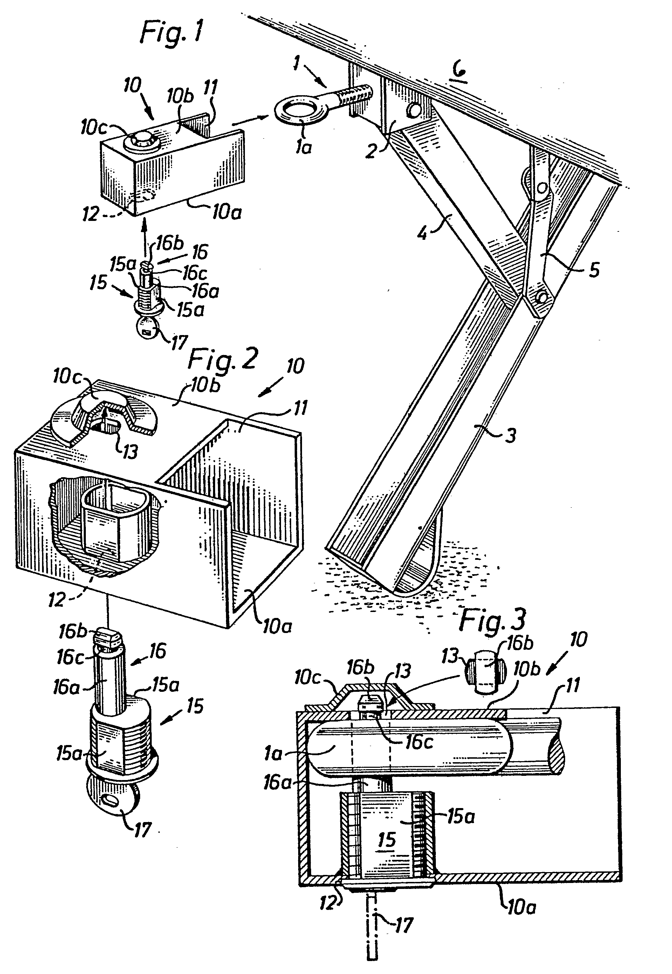

In Figure 1, the reference 1 identifies a screwed shaft of a screw jack 2, by means of which a supporting leg 3 of a caravan 6 can be caused to move between an active and an inactive position. The support leg 3 is actuated by the screw jack via a stay 4. Arranged between the supporting leg and the caravan is a link 5.

The caravan can be prevented from being removed by unauthorized persons by locking the supporting leg 3 in its downward, supporting position. As will be understood, it is not possible to drive the caravan away with the leg in this position.

To this end, the threaded shaft 1 is provided at one end with an anchoring means in the form of an eye 1a through which an active element of a lock cylinder is intended to pass.

The locking device itself comprises a housing 10 having an open end 11 and two mutually opposite sides 10a and 10b, of which one, in Figure 1 the lower side 10a, is provided with a non-round recess or opening 12 for a lock cylinder, and the other side, in Figure 1 the upper side 10b, is provided with an outwardly bulged portion 10c. A lock cylinder 15 provided with two mutually opposite non-round sides can be inserted into the opening 12 in the lower housing side 10a.

The plug of the lock cylinder 15 merges with an active element which, in the illustrated embodiment, comprises a rotatable anchoring latch generally shown at 16. The latch comprises a peg part 16a which is joined to the cylinder plug and which is provided at one end with a non-round head 16b, said head being defined by a waisted part 16c. The head 16b in one position of rotation is able to pass into a non-round hole 13 in the upper wall 10b of the housing. Subsequent to turning the anchoring latch 16 by means of a key 17, the head 16b is held in the non-round hole 13, so as to prevent the cylinder from being removed from the housing.

The locking position of the locking device is shown in Figure 3. The housing 10 of the locking device is fitted on the threaded shaft 1 and its eye 1a, whereafter the lock cylinder 15 is inserted into the opening 12 in the lower wall of the housing, so that the anchoring latch 16 passes through the eye 1a in a direction at right angles to the shaft 1. By turning the key 17, the head 16b of the anchoring latch 16 is held in the non-round opening 13. Subsequent to removing the key 17 from the lock cylinder, the housing cannot be removed from the shaft 1, which is thereby locked against rotation. The hole 13 in the housing is on the outside covered with an outwardly bulged part 10c so that the head 16b is protected when inserted in the hole.

When the supporting leg is to be raised, the key is inserted into the lock cylinder and turned, whereafter the lock cylinder and the anchoring latch can be removed and the housing taken away. The shaft 1 can then be turned to lift the supporting leg.

When the leg is in its raised position, the locking device can be mounted onto the shaft 1 in a corresponding manner, thereby providing a locking device for the leg during transport of the caravan or storage thereof.

**Claims**

1. A locking device for locking a pivotable or a rotatable shaft against rotation, e.g. a shaft (1) for activating the supporting legs (3) of a caravan (6), said locking device comprising a housing (10) in which the shaft (1) and an anchoring means (1a) associated therewith can be inserted, said anchoring means (1a) being arranged to co-act with an active element (16) of a lock cylinder (15) so that, in the locking position, the housing (10) is held on the shaft (1) and the shaft (1) is held against rotation, characterized in that the housing has a means (11) preventing its rotation relative to a fixed structure (2), that the lock cylinder (15) and its active element (16) are arranged to be inserted at right angles to the shaft (1) in an opening (12) in the housing (10) and in that the active element (16), in the position for co-operation with the anchoring means (1a) of the shaft, can be rotated to anchor the shaft (1), the lock cylinder (15) and its active element (16) relative to the housing (10).

2. A locking device according to claim 1, characterized in that the active element (16) of the lock cylinder (15) can be anchored in the side (10b) of the housing (10) opposite the opening (12).

3. A locking device according to claim 1 or claim 2, characterized in that the anchoring means of the shaft comprises a stirrup-like structure or an eye (1a) through which the active element (16) of the lock cylinder (15) can pass.

4. A locking device according to any one of claims 1—3, characterized in that the opening (12) in the housing (10) is defined by a non-round part whose dimensions correspond to the external dimensions of the lock cylinder (15).

5. A locking device according to any one of claims 1—4, characterized in that the active element (16) of the lock cylinder (15) has at one end a non-round head (16b) which, in one position of rotation, can be passed through a non-round hole (13) in the wall (10b) of the housing, but is held in the hole against axial movement in another position of rotation.

6. A locking device according to claim 5, characterized in that the head (16b) is defined on one side by a waisted portion (16c) arranged to co-operate with the wall (10b) defining the hole (13) in said housing; and in that the hole is covered on the outside thereof with an outwardly bulged part (10c) or like housing part, so that the head (16b) is protected when inserted in the hole (13).

## Revendications

1. Un dispositif de verrouillage pour immobiliser en rotation un arbre pivotant ou rotatif, par exemple, un arbre (1) servant à actionner les béquilles porteuses (3) d'une caravane (6), ce dispositif de verrouillage comportant un boîtier (10) dans lequel l'arbre (1) et un moyen d'ancrage (1a) qui lui est associé peuvent être introduits, le moyen d'ancrage (1a) étant agencé pour coopérer avec un élément actif (16) d'un cylindre de serrure (15) de sorte que, dans la position de verrouillage, le boîtier (10) est maintenu sur l'arbre (1) et l'arbre (1) est maintenu immobilisé en rotation, caractérisé en ce que le boîtier comporte un moyen (11) empêchant sa rotation par rapport à une structure fixe (2), en ce que le cylindre de serrure (15) et son élément actif (16) sont agencés de manière à pouvoir être introduits, perpendiculairement à l'arbre (1), dans une ouverture (12) du boîtier (10) et en ce que l'élément actif (16), dans une position de coopération avec le moyen d'ancrage (1a) de l'arbre, peut être tourné pour ancrer l'arbre (1), le cylindre de serrure (15) et son élément actif (16) par rapport au boîtier (10).

2. Un dispositif de verrouillage selon la revendication 1, caractérisé en ce que l'élément actif (16) du cylindre de serrure (15) peut être ancré dans le côté (10b) du boîtier (10) opposé à l'ouverture (12).

3. Un dispositif de verrouillage selon la revendication 1 ou la revendication 2, caractérisé en ce que le moyen d'ancrage de l'arbre comprend une structure en forme d'étrier ou un anneau (1a) à travers lequel l'élément actif (16) du cylindre de serrure (15) peut passer.

4. Un dispositif de verrouillage selon l'une des revendications 1 à 3, caractérisé en ce que l'ouverture (12) du boîtier (10) est délimitée par une partie non circulaire dont les dimensions correspondent aux dimensions externes du cylindre de serrure (15).

5. Un dispositif de verrouillage selon l'une des revendications 1 à 4, caractérisé en ce que l'élément actif (16) du cylindre de serrure (15) comporte, à une extrémité, une tête non circulaire (16b) laquelle, dans une position de rotation, peut être enfilée dans un trou non circulaire (13) de la paroi (10b) du boîtier mais est retenue dans le trou contre tout mouvement axial dans une autre position de rotation.

6. Un dispositif de verrouillage selon la revendication 5, caractérisé en ce que la tête (16b) est délimitée d'un côté par une partie rétrécie (16c) agencée pour coopérer avec la paroi (10β) qui délimite le trou (13) du boîtier;

et en ce que le trou est recouvert sur son côté extérieur par une partie (10c) renflée vers l'extérieur ou une partie analogue du boîtier, de sorte que la tête (16b) est protégée lorsqu'elle est insérée dans le trou (13).

## Patentansprüche

1. Arretiervorrichtung zur Sicherung eines schwenkbaren oder drehbaren Schaftes gegen Verdrehung, z.B. eines Schaftes (1) zur Aktivierung des Stützarmes (3) eines Wohnwagens (6), die Arretiervorrichtung ein Gehäuse (10) enthält in welchem der Schaft (1) mit einem ihm zugeordneten Verankerungsteil (1a) eingesteckt werden kann, der Verankerungsteil (1a) zur Zusammenwirkung mit einem aktiven Element (16) eines Schloss-Zylinders (15) derart ausgebildet ist, dass in der Schliessposition das Gehäuse (10) auf dem Schaft (1) gehalten ist und der Schaft (1) gegen Verdrehung gesichert ist, dadurch gekennzeichnet, dass das Gehäuse Mittel (11) aufweist, welche seine Verdrehung relativ zu einem festen Bauteil (2) verhindern, dass der Schloss-Zylinder (15) und sein aktives Element (16) so ausgebildet sind, dass es im rechten Winkel zum Schaft (1) in eine Oeffnung (12) des Gehäuses (10) eingesetzt werden kann und dass das aktive Element (16), in der zum Zusammenwirken mit dem Verankerungsteil (1a) des Schaftes bestimmten Position verdreht werden kann um den Schaft (1) den Schloss-Zylinder (15) und sein aktives Element (16) relativ zum Gehäuse (10) zu arretieren.

2. Arretiervorrichtung nach Anspruch 1, dadurch gekennzeichnet, dass das aktive Element (16) des Schloss-Zylinders (15) auf derjenigen Seite (10b) des Gehäuses (10) verankerbar ist, welche der Oeffnung (12) gegenüberliegt.

3. Arretiervorrichtung nach Anspruch 1 oder 2, dadurch gekennzeichnet, dass der Verankerungsteil des Schaftes eine hakenähnliche Form hat oder als Ring (1a) ausgebildet ist durch den das aktive Element (16) des Schloss-Zylinders (15) hindurchdringt.

4. Arretiervorrichtung nach irgend einem der Ansprüche 1—3, dadurch gekennzeichnet, dass die Oeffnung (12) im Gehäuse (10) eine nichtrunde Form hat und den äussern Abmessungen des Schloss-Zylinders (15) entspricht.

5. Arretiervorrichtung nach irgend einem der Ansprüche 1—4, dadurch gekennzeichnet, dass das aktive Element (16) des Schloss-Zylinders (15) an seinem einen Ende einen nicht-runden Kopf (16b) hat, welcher in einer Drehlage eine nicht-runde Oeffnung (13) in der Wand (10b) des Gehäuses durchdringt, in einer andern Drehlage in der Oeffnung jedoch gegen axiale Verschiebung gesichert ist.

6. Arretiervorrichtung nach Anspruch 5, dadurch gekennzeichnet, dass der Kopf (16b) auf seiner einen Seite eine Einschnürung (16c) enthält, welche mit der Wand (10b) zusammenwirkt in welcher sich die Oeffnung (13) im Gehäuse befindet; und dass die Oeffnung (13) auf ihrer Aussenseite mit einem ausbauchenden Teil (10c) oder einem entsprechenden Gehäuseteil überdeckt ist, sodass der Kopf (16b) im in die Oeffnung (13) eingesteckten Zustand geschützt ist.

0 022 102

Fig. 1

Fig. 2

Fig. 3

1